# EUROPÄISCHE PATENTANMELDUNG

(11) **EP 1 396 680 A1**
(43) Veröffentlichungstag der Anmeldung: **10.03.2004**
(21) Anmeldenummer: 02020053.1
(22) Anmeldetag: 06.09.2002
(51) Int. Cl.: F23K 3/14, B65D 88/68, B65G 65/46

(54) **Pelletlager- und zuführungsaggregat**

(71) Anmelder: Roth Industry GmbH & Co., 01877 Bischofswerda (DE)
(72) Erfinder: Böhme, Wolf-Albrecht, 01877 Bischofswerda (DE)
(74) Vertreter: Rohmann, Michael, Dr.

(57) **Zusammenfassung**

Pelletlager- und zuführungsaggregat, insbesondere zur Lagerung und Zuführung von Brennstoff-Pellets. Es ist ein Pelletlagerraum mit Lagerraumboden und Lagerraumwänden zur Aufnahme und Lagerung von Pellets vorgesehen. Im unteren Bereich des Pelletlagerraumes ist zumindest eine erste rohrförmige Fördervorrichtung für die Förderung der Pellets zu einer Übergabestation angeordnet. Die erste rohrförmige Fördervorrichtung weist über ihre Länge verteilte Öffnungen zur Einführung der Pellets in die Fördervorrichtung auf. Die Pellets sind der von der Übergabestation zumindest einer Verwendungseinrichtung zuführbar.

## Beschreibung

Die Erfindung betrifft ein Pelletlager- und zuführungsaggregat, insbesondere zur Lagerung und Zuführung von Brennstoff-Pellets. - Das erfindungsgemäße Aggregat ist also für die Lagerung und die Förderung bzw. Zuführung von Pellets zu ihrem Verwendungsort bestimmt. Bei Pellets handelt es sich in der Regel um kugelförmige Feststoffteilchen, annähernd kugelförmge Feststoffteilchen oder Feststoffteilchen mit ähnlichen Formen. Pellets meint auch Feststoffteilchen in Granulatform. - Die Erfindung umfasst einen Pelletlagerraum zur Lagerung der Pellets und zumindest eine Fördervorrichtung zur Abförderung der gelagerten Pellets. Die abgeförderten Pellets werden dann der weiteren Verwendung zugeführt. Wenn es sich nach bevorzugter Ausführungsform der Erfindung um Brennstoff-Pellets handelt, werden diese Brennstoff-Pellets einer Heizanlage bzw. einem Heizkessel zugeführt.

Brennstoff-Pellets meint im Rahmen der Erfindung brennbare Pellets, die eine Alternative zu anderen Brennstoffen wie Heizöl oder Heizgas darstellen. Diese Brennstoffart findet zunehmend Eingang in die Heiztechnik. Wie beispielsweise Heizöl werden auch Brennstoff-Pellets gelagert und von einem Pelletlagerraum zur Heizanlage bzw. zu einem Heizkessel transportiert. Brennstoff-Pellets bestehen insbesondere aus gepressten Holzteilchen bzw. Holzspänen, beispielsweise Hobel- oder Sägespänen. Brennstoff-Pellets können aber auch aus Stroh, Hanf, Flachs und dergleichen bestehen.

Die aus der Praxis bekannten Lagerungs- und Zuführungsmaßnahmen für Pellets zeichnen sich häufig durch den Nachteil aus, dass der Pelletlagerraum, in dem die Pellets gelagert werden, nicht funktionssicher und effektiv geleert werden kann. Mit anderen Worten ist eine problemlose Entnahme bzw. eine vollständige Restentleerung des Lagerraumes oftmals nicht oder nur mit zusätzlichen aufwendigen Maßnahmen möglich. Außerdem können bei den bekannten Aggregaten Entnahmeöffnungen und/oder Fördervorrichtungen für die Pellets leicht verstopfen. Oftmals ist es zumindest längerfristig nicht möglich, die Pellets ihrem Verwendungszweck, beispielsweise einer Heizanlage störungsfrei und problemlos zuzuführen. Die aus der Praxis bekannten Lagerungs- und Zuführungsmaßnahmen für Pellets zeichnen sich fernerhin normalerweise durch den Nachteil aus, dass die Pellets, insbesondere Brennstoff-Pellets vor äußeren Einflüssen nicht ausreichend geschützt sind. Äußere Einflüsse meint dabei zunächst insbesondere die Einwirkung von Feuchtigkeit. Brennstoff-Pellets sind gegenüber der Einwirkung von Feuchtigkeit sehr empfindlich und bereits relativ geringfügige Feuchtigkeitseinwirkung kann die Pellets als Brennstoff unbrauchbar machen. Äußere Einflüsse meint aber auch die Einwirkung von Funken bzw. Feuer und somit Brandeinwirkungen auf die Pellets. Bei den bekannten Lagerungsmaßnahmen sind die Brennstoff-Pellets häufig nicht ausreichend brandgeschützt aufbewahrt.

Demgegenüber liegt der Erfindung das technische Problem zugrunde, ein Pelletlager- und zuführungsaggregat der eingangs genannten Art anzugeben, mit dem die Pellets einerseits effektiv und funktionssicher gefördert werden können und bei dem die Pellets andererseits vor äußeren Einflüssen, beispielsweise gegenüber Feuchtigkeitseinwirkung ausreichend geschützt sind. Fernerhin soll vor allem eine einfache und problemlose Restentleerung des Pelletlagerraumes möglich sein und die Pellets sollen exakt dosiert ihrem Verwendungszweck zuführbar sein.

Zur Lösung dieses technischen Problems lehrt die Erfindung ein Pelletlager- und zuführungsaggregat, insbesondere zur Lagerung und Zuführung von Brennstoff-Pellets,
wobei ein Pelletlagerraum mit Lagerraumboden und Lagerraumwänden zur Aufnahme und Lagerung von Pellets vorgesehen ist,
wobei im unteren Bereich des Pelletlagerraumes zumindest eine erste rohrförmige Fördervorrichtung für die Förderung der Pellets zu einer Übergabestation angeordnet ist,
wobei die erste rohrförmige Fördervorrichtung über ihre Länge verteilte Öffnungen aufweist, wobei die Öffnungen mit der Maßgabe ausgebildet sind, dass die Pellets aus dem Pelletlagerraum in die Fördervorrichtung einführbar sind und wobei die Pellets von der Übergabestation zumindest einer Verwendungseinrichtung zuführbar sind.

Pelletlager- und zuführungsaggregat meint eine Vorrichtung, die zum einen einen Pelletlagerraum zur Lagerung der Pellets umfasst und die zum anderen zumindest eine Zuführungsvorrichtung bzw. Fördervorrichtung umfasst, mit der die Pellets abförderbar bzw. ihrem Verwendungszweck zuführbar sind. Der Pelletlagerraum ist zweckmäßigerweise ein geschlossener Raum, der ausreichend abgedichtet ist, damit eine trockene Lagerung der Pellets möglich ist. Bei dem Pelletlagerraum handelt es sich insbesondere um den Raum eines Gebäudes, beispielsweise um einen Kellerraum.

Dass die Pellets von der Übergabestation zumindest einer Verwendungseinrichtung zuführbar sind, meint insbesondere und nach bevorzugter Ausführungsform der Erfindung, dass die Pellets als Brennstoff-Pellets einer Heizanlage bzw. einem Heizkessel mit Brenner zuführbar sind. Dem Heizkessel kann ein Vorratsbehälter vorgeschaltet sein, in dem die Pellets aufgenommen werden. Dabei ist dieser Vorratsbehälter zweckmäßigerweise unmittelbar neben dem Heizkessel angeordnet. - Grundsätzlich kann sich der Begriff Verwendungseinrichtung im Rahmen der Erfindung aber auch auf andere Vorrichtungen beziehen, beispielsweise auf einen Transportcontainer oder ein Transportfahrzeug oder dergleichen.

Dass die erste rohrförmige Fördervorrichtung über ihre Länge verteilte Öffnungen zur Einführung der Pellets aufweist, meint insbesondere und vorzugsweise, dass eine Mehrzahl separater Öffnungen in der Fördervorrichtung vorgesehen sind, die zur Aufnahme der Pellets aus dem Pelletlagerraum vorgesehen sind. Dieses Merkmal meint aber auch, dass lediglich eine einzige Öffnung vorgesehen sein kann, die sich zweckmäßigerweise über die gesamte Länge oder im Wesentlichen die gesamte Länge der Fördervorrichtung erstreckt.

Der Pelletlagerraum weist neben dem Lagerraumboden und den Lagerraumwänden zweckmäßigerweise eine Lagerraumdecke bzw. Lagerraumabdeckung auf, die vorzugsweise ausreichend dicht sein sollte. - Es liegt im Rahmen der Erfindung, dass zumindest ein Teil des Lagerraumbodens mit der Maßgabe geneigt ausgebildet ist, dass die Pellets zu der ersten rohrförmigen Fördervorrichtung geleitet werden. Die Pellets rutschen dabei also über die Schräge des geneigten Lagerraumbodens zu der ersten rohrförmigen Fördervorrichtung bzw. in die Öffnungen der ersten rohrförmigen Fördervorrichtung. Es liegt im Rahmen der Erfindung, dass der gesamte Lagerraumboden geneigt ausgebildet ist. Vorzugsweise sind zwei parallel zu der ersten rohrförmigen Fördervorrichtung verlaufende Bodenabschnitte des Lagerraumbodens mit der Maßgabe geneigt ausgebildet, dass die Pellets zu der ersten rohrförmigen Fördervorrichtung geleitet werden. Dabei handelt es sich zweckmäßigerweise um bezüglich der ersten rohrförmigen Fördervorrichtung gegenüberliegende Bodenabschnitte des Lagerraumbodens. Beide Bodenabschnitte laufen schräg auf die erste rohrförmige Fördervorrichtung zu und zwar zweckmäßigerweise über die gesamte Länge der ersten rohrförmigen Fördervorrichtung. Der Lagerraumboden ist also vorzugsweise im Querschnitt trichterförmig auf die erste rohrförmige Fördervorrichtung zulaufend ausgebildet. Die Fördervorrichtung schließt zweckmäßigerweise an den unteren Stirnkanten der beiden Bodenabschnitte an. Ein geneigter Bodenabschnitt hat vorzugsweise einen Neigungswinkel α von 25° bis 65°, bevorzugt von 35° bis 55° in Bezug auf den horizontalen Untergrund. Nach sehr bevorzugter Ausführungsform der Erfindung beträgt der Neigungswinkel α des geneigten Bodenabschnittes 45° oder etwa 45°.

Zweckmäßigerweise haben beide in Bezug auf die erste rohrförmige Fördervorrichtung gegenüberliegenden geneigten Bodenabschnitte einen Neigungswinkel von 25° bis 65°, vorzugsweise von 35° bis 55°, sehr bevorzugt von 45° bzw. etwa 45° in Bezug auf den horizontalen Untergrund.

Nach sehr bevorzugter Ausführungsform, der im Rahmen der Erfindung ganz besondere Bedeutung zukommt, handelt es sich bei der ersten rohrförmigen Fördervorrichtung um eine Schneckenfördereinrichtung. Die Schneckenfördereinrichtung besteht dabei zweckmäßigerweise wie üblich aus einer Förderschnecke, die in einem Rohr aufgenommen ist.

Es liegt im Rahmen der Erfindung, dass die Übergabestation außerhalb des Pelletlagerraumes angeordnet ist. Dann wird die erste rohrförmige Fördervorrichtung zweckmäßigerweise durch eine Lagerraumwand hindurchgeführt. Es versteht sich, dass eventuelle Spalte zwischen der ersten rohrförmigen Fördervorrichtung und der Lagerraumwand auf geeignete Weise abgedichtet werden.

Zweckmäßigerweise erstreckt sich die erste rohrförmige Fördervorrichtung über zumindest 80 % der Länge des Lagerraumbodens. Die Länge des Lagerraumbodens meint dabei die Ausdehnung des Lagerraumbodens in Längsrichtung der Fördervorrichtung. Vorzugsweise erstreckt sich die erste rohrförmige Fördervorrichtung über die gesamte Länge bzw. im Wesentlichen über die gesamte Länge des Lagerraumbodens. Im Betriebszustand ist die erste rohrförmige Fördervorrichtung vorzugsweise horizontal bzw. im Wesentlichen horizontal orientiert und verläuft parallel bzw. im Wesentlichen parallel zu einem horizontalen Untergrund bzw. zu dem horizontalen Erdboden.

Nach bevorzugter Ausführungsform der Erfindung erstrecken sich die Öffnungen über zumindest 50%, vorzugsweise über zumindest 65%, sehr bevorzugt über zumindest 80% der Länge der ersten rohrförmigen Fördervorrichtung. Die Öffnungen sind zweckmäßigerweise in der Oberseite bzw. in der oberen Hälfte der ersten rohrförmigen Fördervorrichtung angeordnet.

Nach sehr bevorzugter Ausführungsform, der im Rahmen der Erfindung ganz besondere Bedeutung zukommt, sind zumindest über einem Teil der Öffnungen der ersten rohrförmigen Fördervorrichtung die Öffnungen zumindest teilweise überdachende Ableitelemente mit der Maßgabe angeordnet, dass Pellets durch die Ableitelemente auf zumindest einen geneigten Bodenabschnitt und von dort in die Öffnungen geleitet werden. Vorzugsweise weist ein Ableitelement zumindest eine schräge Fläche auf, über die die Pellets auf einen geneigten Bodenabschnitt des Lagerraumbodens geleitet werden. Nach bevorzugter Ausführungsform weist ein Ableitelement zwei schräge Flächen auf, von denen jede schräge Fläche einem geneigten Bodenabschnitt zugeordnet ist, auf welchen die Pellets über die zugeordnete schräge Fläche geleitet werden bzw. rutschen. Die Ableitelemente erstrecken sich vorzugsweise über zumindest 70% der Länge der ersten rohrförmigen Fördervorrichtung und über zumindest 90% der Gesamtlänge der Öffnungen der ersten rohrförmigen Fördervorrichtung. Nach bevorzugter Ausführungsform erstrecken sich die Ableitelemente über die gesamte Länge der Öffnungen in der ersten rohrförmigen Fördervorrichtung. Dabei liegt es auch im Rahmen der Erfindung, dass nur ein einziges durchgehendes Ableitelement vorgesehen werden kann. Die Ableitelemente sind zweckmäßigerweise als Ableitbleche ausgeführt. Nach sehr bevorzugter Ausführungsform der Erfindung sind die Ableitelemente U-förmig und/oder V-förmig ausgebildet und ist die U-Öffnung und/oder V-Öffnung der ersten rohrförmigen Fördervorrichtung zugewandt. Die letztgenannten Ableitelemente haben sich im Rahmen der Erfindung besonders bewährt.

Nach einer Ausführungsform der Erfindung ist die an die erste rohrförmige Fördervorrichtung anschließende Übergabestation als Pufferspeicherraum für die Pellets ausgebildet. Bei dieser Ausführungsform fördert die erste rohrförmige Fördervorrichtung die Pellets also zunächst in diesen Pufferspeicherraum. Der Pufferspeicherraum ist zweckmäßigerweise trichterförmig ausgebildet. Vorzugsweise ist der Pufferspeicherraum mit einer Messeinrichtung ausgestattet, mit der der Füllstand des Pufferspeicherraumes erfasst werden kann. Zweckmäßigerwseise kann in Abhängigkeit dieses gemessenen Füllstandes die erste rohrförmige Fördervorrichtung gesteuert werden.

Nach einer Ausführungsform der Erfindung ist an die Übergabestation eine zweite rohrförmige Fördervorrichtung angeschlossen, mit der die Pellets von der Übergabestation zu der Verwendungseinrichtung, vorzugsweise zu einem Heizkessel förderbar sind. Dabei kann die Übergabestation als der vorstehend erläuterte Pufferspeicherraum ausgebildet sein oder nach einer anderen Ausführungsform kann die Übergabestation als Kupplungsvorrichtung zwischen der ersten und der zweiten rohrförmigen Fördervorrichtung ausgebildet sein.

Gemäß einer Ausführungsform der Erfindung ist die zweite rohrförmige Fördervorrichtung als Schneckenfördereinrichtung ausgeführt. Nach einer anderen Ausführungsform der Erfindung ist die zweite rohrförmige Fördervorrichtung ein Saugschlauch einer Saugfördervorrichtung. Dabei ist an die Übergabestation zweckmäßigerweise der Saugschlauch angeschlossen, der die Übergabestation mit einem Sauggerät verbindet, das nach bevorzugter Ausführungsform der Erfindung an einem Heizkessel vorgesehen ist bzw. an einem dem Heizkessel vorgeschalteten Vorratsbehälter vorgesehen ist.

Der Erfindung liegt die Erkenntnis zugrunde, dass mit dem erfindungsgemäßen Pelletlager- und zuführungsaggregat zum einen eine sehr geschützte Lagerung und Förderung von Pellets möglich ist, wobei die Pellets vor allem vor Feuchtigkeitseinflüssen und vor unerwünschter Brandeinwirkung wirksam geschützt werden. Zum anderen ist eine sehr funktionssichere und störungsfreie Förderung bzw. Zuführung der Pellets möglich. Eine Restentleerung des Pelletlagerraumes lässt sich problemlos verwirklichen. Die Pellets können mit dem erfindungsgemäßen Aggregat sehr gezielt dosiert ihrem Verwendungszweck, insbesondere einer Heizanlage zugeführt werden. Das erfindungsgemäße Pelletlagerund zuführungsaggregat zeichnet sich nichtsdestoweniger durch einen relativ einfachen Aufbau aus und dieses Aggregat kann auch problemlos in bereits bestehenden Gebäuden eingebaut bzw. integriert werden kann.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch einen Teil eines erfindungsgemäßen Pelletlager- und zuführungsaggregates in einer ersten Ausführungsform,
- Fig. 2: eine Draufsicht auf den Gegenstand nach Fig. 1,
- Fig. 3: einen Schnitt A-A durch den Gegenstand nach Fig. 2,
- Fig. 4: einen vergrößerten Ausschnitt aus Fig. 3,
- Fig. 5: einen weiteren Teil eines erfindungsgemäßen Pelletlager- und zuführungsaggregates in der Ausführungsform nach Fig. 1,
- Fig. 6: den Gegenstand nach Fig. 5 in einer zweiten Ausführungsform und
- Fig. 7: den Gegenstand nach Fig. 5 in einer dritten Ausführungsform.

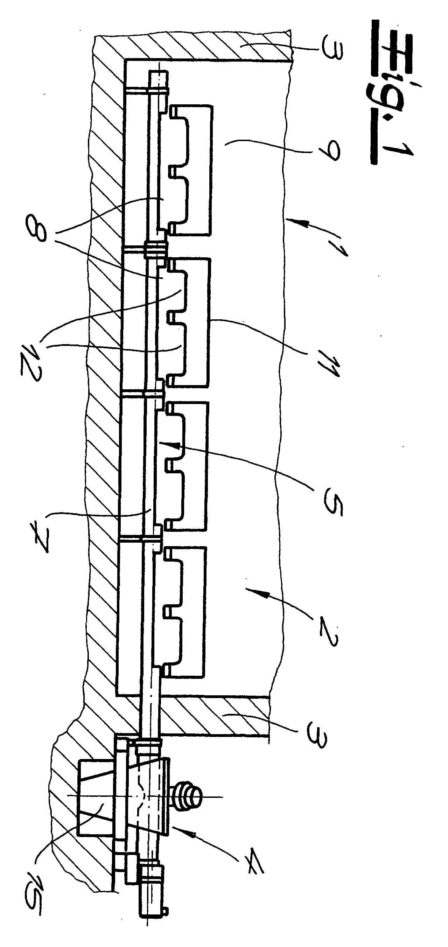

Die Figuren betreffen ein Pelletlager- und zuführungsaggregat, insbesondere zur Lagerung und Zuführung von Brennstoff-Pellets. Das Aggregat umfasst einen Pelletlagerraum 1 mit Lagerraumboden 2 und Lagerraumwänden 3, welcher Pelletlagerraum 1 zur Aufnahme und Lagerung der in den Figuren nicht dargestellten Pellets vorgesehen ist. Im unteren Bereich des Pelletlagerraumes 1 ist eine erste rohrförmige Fördervorrichtung für die Förderung der Pellets zu einer Übergabestation 4 angeordnet. Die erste rohrförmige Fördervorrichtung ist nach sehr bevorzugter Ausführungsform und im Ausführungsbeispiel als erste Schneckenfördereinrichtung 5 ausgebildet. Dabei ist in üblicher Weise eine Förderschnecke 6 in einem Förderrohr 7 aufgenommen. Die erste Schneckenfördereinrichtung 5 erstreckt sich im Ausführungsbeispiel (Fig. 1) über die gesamte Länge bzw. im Wesentlichen über die gesamte Länge des Pelletlagerraumes 1. Die erste Schneckenfördereinrichtung 5 bzw. ihr Förderrohr 7 weist über die Länge verteilte Öffnungen 8 zur Einführung der Pellets in die Schneckenfördereinrichtung 5 auf. Im Ausführungsbeispiel nach Fig. 1 sind insgesamt vier solcher Öffnungen 8 in dem Förderrohr 7 vorgesehen, wobei diese Öffnungen 8 mit gleichen konstanten Abständen voneinander angeordnet sind. In Fig. 1 ist erkennbar, dass sich die Öffnungen 8 über mehr als 80% der Länge der ersten Schneckenfördereinrichtung 5 bzw. des Förderrohres 7 erstrecken. Die Öffnungen 8 sind vorzugsweise und im Ausführungsbeispiel oberseitig, d. h. in der oberen Hälfte des Förderrohres 7 vorgesehen.

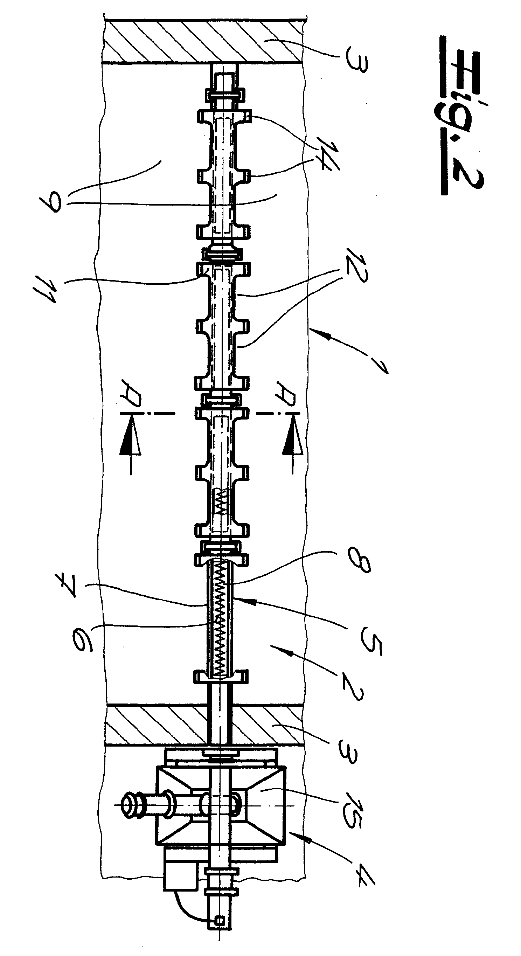

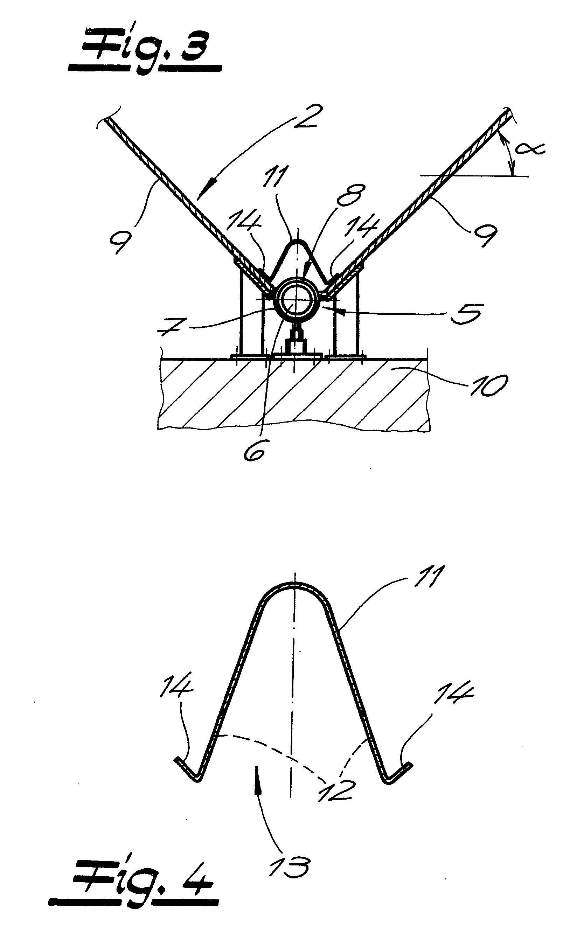

Einer vergleichenden Betrachtung der Figuren 2 und 3 ist entnehmbar, dass der Lagerraumboden 2 mit der Maßgabe geneigt ausgebildet ist, dass die Pellets zu der ersten Schneckenfördereinrichtung 5 bzw. in die Öffnungen 8 der ersten Schneckenfördereinrichtung 5 geleitet werden. Vorzugsweise und im Ausführungsbeispiel besteht der Lagerraumboden 2 aus zwei geneigten Bodenabschnitten 9, die beidseitig von der ersten Schneckenfördereinrichtung 5 angeordnet sind und die Pellets zu der ersten Schneckenfördereinrichtung 5 leiten. Die beiden geneigten Bodenabschnitte 9 bilden einen im Querschnitt V-förmigen Lagerraumboden 2 (Fig. 3). Die nicht dargestellten Pellets rutschen unter Einwirkung der Schwerkraft über die Schräge der geneigten Bodenabschnitte 9 zu der ersten Schneckenfördereinrichtung 5 bzw. in die Öffnungen 8 dieser Schneckenfördereinrichtung 5. Vorzugsweise und im Ausführungsbeispiel beträgt der Neigungswinkel α jedes geneigten Bodenabschnittes 9 in Bezug auf den horizontalen Untergrund 10 45°. In Fig. 3 ist im Übrigen erkennbar, dass sowohl die erste Schneckenfördereinrichtung 5 als auch die geneigten Bodenabschnitte 9 mit geeigneten Stützen auf dem Untergrund 10 abgestützt sind.

Nach sehr bevorzugter Ausführungsform und im Ausführungsbeispiel sind für die Öffnungen 8 der ersten Schneckenfördereinrichtung 5 überdachende Ableitelemente bzw. Ableitbleche 11 vorgesehen. Diese sind mit der Maßgabe angeordnet, dass die Pellets durch die Ableitbleche 11 auf die geneigten Bodenabschnitte 9 und von dort durch Ausnehmungen 12 der Ableitbleche 11 in die Öffnungen 8 geleitet werden. Dazu sind die Ableitbleche 11 im Ausführungsbeispiel V-förmig ausgebildet (Fig. 3, 4) und diese V-förmigen Ableitbleche 11 sind in dem Pelletlagerraum 1 so orientiert, dass die V-Öffnung 13 der ersten Schneckenfördereinrichtung 5 zugewandt ist. In bestimmten Abständen stützen sich die Ableitbleche 11 mit winkelförmigen Verlängerungen 14 auf den geneigten Bodenabschnitten 9 des Lagerraumbodens 2 ab (Fig. 3 und 4). Zwischen den sich auf dem Lagerraumboden 2 abstützenden winkelförmigen Verlängerungen 14 sind die genannten Ausnehmungen 12 der Ableitbleche 11 vorgesehen, durch die die Pellets über die Schräge der geneigten Bodenabschnitte 9 in die Öffnungen 8 der ersten Schneckenfördereinrichtung 5 rutschen können. Mit Hilfe der Ableitbleche 11 wird verhindert, dass die Pellets einen zu hohen Druck auf die Förderschnecke 6 ausüben. Erfindungsgemäß werden die Pellets lediglich von den Seiten her der Förderschnecke 6 dosiert zugeführt.

In den Figuren ist erkennbar, dass die an die erste Schneckenfördereinrichtung 5 anschließende Übergabestation 4 außerhalb des Pelletlagerraumes 1 angeordnet ist. Im Ausführungsbeispiel nach den Figuren 1 bis 5 ist die Übergabestation 4 als Pufferspeicherraum 15 für die Pellets ausgebildet. In Fig. 1 ist erkennbar, dass der Pufferspeicherraum 5 trichterartig ausgeführt ist. Es liegt im Rahmen der Erfindung, dass eine in den Figuren nicht dargestellte erste Messeinrichtung vorgesehen ist, mit der der Füllstand des Pufferspeicherraumes 15 erfasst werden kann. In Abhängigkeit von dem Füllstand kann die erste Schneckenfördereinrichtung 5 gesteuert werden und beispielsweise bei leerem Pufferspeicherraum 15 zur Förderung von Pellets eingeschaltet bzw. aktiviert werden.

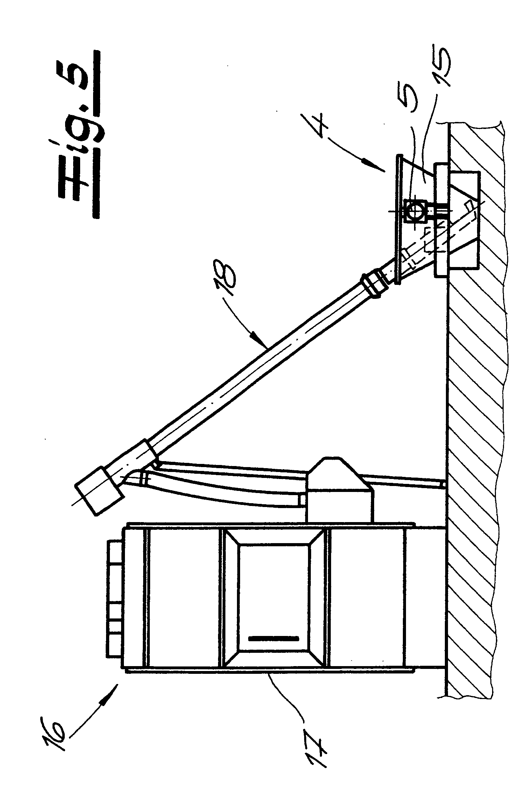

Die Pellets werden von der Übergabestation 4 einer Verwendungseinrichtung zugeführt. Vorzugsweise und im Ausführungsbeispiel handelt es sich bei den Pellets um Brennstoff-Pellets und diese Brennstoff-Pellets werden einer Heizanlage 16 mit Heizkessel 17 als Verwendungseinrichtung zugeführt. - An die Übergabestation 4 ist bei allen Ausführungsformen (Fig. 5, 6 und 7) eine zweite rohrförmige Fördervorrichtung angeschlossen, mit der die Pellets von der Übergabestation 4 zu der Heizanlage 16 gefördert werden. Im Ausführungsbeispiel nach der Fig. 5 ist die zweite rohrförmige Fördervorrichtung als zweite Schneckenfördereinrichtung 18 ausgebildet. Die Pellets werden hier aus dem Pufferspeicherraum 15 über die schräg bzw. geneigt angeordnete zweite Schneckenfördereinrichtung 18 der Heizanlage 16 bzw. dem Heizkessel 17 zugeführt. Es liegt im Rahmen der Erfindung, dass die zweite Schneckenfördereinrichtung 18 von einer der Heizanlage 16 zugeordneten Steuer- und/oder Regeleinrichtung gesteuert und/oder geregelt wird.

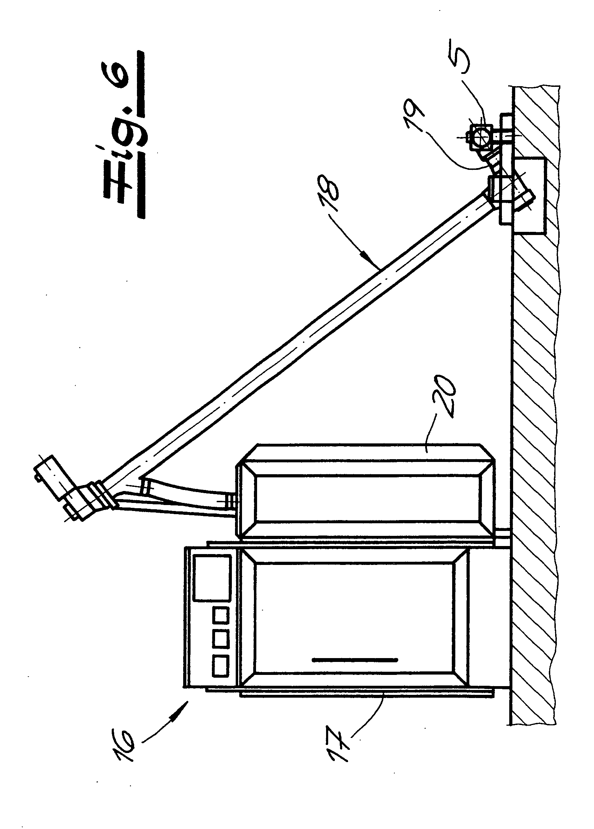

Auch im Ausführungsbeispiel gemäß Fig. 6 ist die zweite rohrförmige Fördervorrichtung als zweite Schneckenfördereinrichtung 18 ausgeführt. Allerdings besteht die Übergabestation 4 hier nicht aus einem Pufferspeicherraum 15 sondern aus einer Kupplungsvorrichtung 19, die die erste Schneckenfördereinrichtung 5 mit der zweiten Schneckenfördereinrichtung 18 verbindet. Dem Heizkessel 17 ist im Ausführungsbeispiel nach Fig. 6 im Übrigen ein Vorratsbehälter 20 vorgeschaltet, in den die Pellets von der zweiten Schneckenfördereinrichtung 18 zunächst überführt werden. Im Ausführungsbeispiel nach Fig. 6 ist am Vorratsbehälter 20 eine nicht dargestellte Messeinrichtung vorgesehen, mit der der Füllstand des Vorratsbehälters 20 erfasst werden kann. Im Abhängigkeit von diesem Füllstand kann mit einer nicht näher dargestellten Steuer- und/oder Regeleinrichtung die erste Schneckenfördereinrichtung 5 und die zweite Schneckenfördereinrichtung 18 gesteuert und/oder geregelt werden.

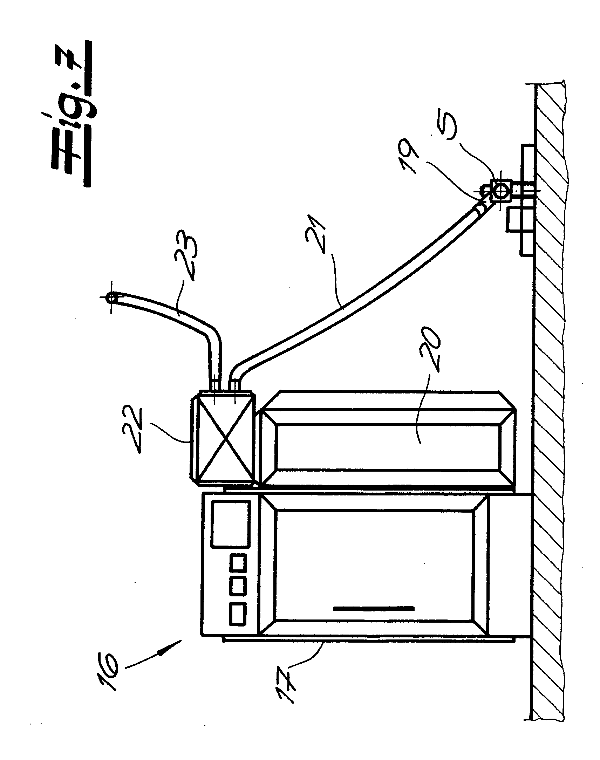

Im Ausführungsbeispiel gemäß Fig. 7 ist die zweite rohrförmige Fördervorrichtung als Saugschlauch 21 ausgebildet. Der Saugschlauch 21 ist über eine Kupplungsvorrichtung 19 zunächst an die erste Schneckenfördereinrichtung 5 angeschlossen. An dem anderen Ende ist der Saugschlauch 21 mit einem Sauggerät 22 verbunden, das im Ausführungsbeispiel über dem Vorratsbehälter 20 angeordnet ist. In Fig. 7 ist weiterhin ein Entlüftungsschlauch 23 erkennbar, der das Sauggerät 22 mit dem Pelletlagerraum 1 verbindet und somit für einen geschlossenen Luftkreislauf sorgt. Wie im Ausführungsbeispiel nach Fig. 6 ist vorzugsweise in dem Vorratsbehälter eine Messeinrichtung vorgesehen, mit der der Füllstand des Vorratsbehälters 20 erfasst werden kann. Nach Maßgabe dieses Füllstandes wird mit einer nicht näher dargestellten Steuer- und/oder Regeleinrichtung sowohl die erste Schneckenfördereinrichtung 5 als auch die zweite rohrförmige Fördervorrichtung bzw. das Sauggerät 22 gesteuert und/oder geregelt.

## Patentansprüche

1. Pelletlager- und zuführungsaggregat, insbesondere zur Lagerung und Zuführung von Brennstoff-Pellets,
wobei ein Pelletlagerraum (1) mit Lagerraumboden (2) und Lagerraumwänden (3) zur Aufnahme und Lagerung von Pellets vorgesehen ist,
wobei im unteren Bereich des Pelletlagerraumes (1) zumindest eine erste rohrförmige Fördervorrichtung für die Förderung der Pellets zu einer Übergabestation (4) angeordnet ist,
wobei die erste rohrförmige Fördervorrichtung über ihre Länge verteilte Öffnungen (8) aufweist, wobei die Öffnungen (8) mit der Maßgabe ausgebildet sind, dass die Pellets aus dem Pelletlagerraum (1) in die Fördervorrichtung einführbar sind, und wobei die Pellets von der Übergabstation (4) zumindest einer Verwendungseinrichtung zuführbar sind.

2. Pelletlager- und zuführungsaggregat nach Anspruch 1, wobei zumindest ein Teil des Lagerraumbodens (2) mit der Maßgabe geneigt ausgebildet ist, dass die Pellets zu der ersten rohrförmigen Fördervorrichtung geleitet werden.

3. Pelletlager- und zuführungsaggregat nach einem der Ansprüche 1 oder 2, wobei die erste rohrförmige Fördervorrichtung eine erste Schneckenfördereinrichtung (5) ist.

4. Pelletlager- und zuführungsaggregat nach einem der Ansprüche 1 bis 3, wobei die Übergabestation (4) außerhalb des Pelletlagerraumes (1) angeordnet ist.

5. Pelletlager- und zuführungsaggregat nach einem der Ansprüche 1 bis 4, wobei sich die erste rohrförmige Fördervorrichtung über zumindest 80 % der Länge des Lagerraumbodens (2) erstreckt.

6. Pelletlager- und zuführungsaggregat nach einem der Ansprüche 1 bis 5, wobei zumindest 50 %, vorzugsweise zumindest 65 %, sehr bevorzugt zumindest 80 % der Länge der ersten rohrförmigen Fördervorrichtung mit Öffnungen versehen ist.

7. Pelletlager- und zuführungsaggregat nach einem der Ansprüche 2 bis 6, wobei über zumindest einem Teil der Öffnungen (8) der ersten rohrförmigen Fördervorrichtung die Öffnungen (8) zumindest teilweise überdachende Ableitelemente mit der Maßgabe angeordnet sind, dass Pellets durch die Ableitelemente auf zumindest einen geneigten Bodenabschnitt (9) und von dort in die Öffnungen (8) geleitet werden.

8. Pelletlager- und zuführungsaggregat nach Anspruch 7, wobei die Ableitelemente U-förmig und/oder V-förmig ausgebildet sind und die U-Öffnung und/oder V-Öffnung (13) der ersten rohrförmigen Fördervorrichtung zugewandt ist.

9. Pelletlager- und zuführungsaggregat nach einem der Ansprüche 1 bis 8, wobei die Übergabestation (4) als Pufferspreicherraum (15) für die Pellets ausgebildet ist.

10. Pelletlager- und zuführungsaggregat nach einem der Ansprüche 1 bis 9, wobei an die Übergabestation (4) eine zweite rohrförmige Fördervorrichtung angeschlossen ist, mit der die Pellets von der Übergabestation (4) zu der Verwendungseinrichtung, vorzugsweise zu einer Heizanlage (16) förderbar sind.

11. Pelletlager- und zuführungsaggregat nach Anspruch 10, wobei die zweite rohrförmige Fördervorrichtung eine zweite Schneckenfördereinrichtung (18) ist.

12. Pelletlager- und zuführungsaggregat nach Anspruch 10, wobei die zweite rohrförmige Fördervorrichtung ein Saugschlauch (21) einer Saugfördervorrichtung ist.
